# EUROPÄISCHE PATENTSCHRIFT

(11) **EP 1 109 004 B1**
(45) Veröffentlichungstag und Bekanntmachung des Hinweises auf die Patenterteilung: **17.03.2010**
(21) Anmeldenummer: 00127338.2
(22) Anmeldetag: 13.12.2000
(51) Int. Cl.: G01N 7/16, G01N 25/14, B22C 1/00

(54) **Verfahren zum Untersuchen des Verhaltens von Bindersystemen von Sandkernen beim Giessen**
Process for investigating the behaviour of binder systems of sand cores during casting
Procédé pour l'étude du comportement de systèmes de liants des noyaux en sable lors de la coulée

(30) Priorität: 13.12.1999 DE 19960042
(43) Veröffentlichungstag der Anmeldung: 20.06.2001
(73) Patentinhaber: Nemak Linz GmbH, 4030 Linz (AT)
(72) Erfinder: Müller, Wolfgang, Dipl.-Ing., 96047 Bamberg (DE)
(74) Vertreter: Cohausz & Florack

(56) Entgegenhaltungen:
- CH-A- 380 414
- DE-A- 2 711 666
- K ZEPPELHAUER ET AL.: "Untersuchungen über die Einsatzmöglichkeit eines Gasmengen-Me$apparates zur Bestimmung der Gasentwicklung von Kernsanden" GIESSEREI - PRAXIS, Nr. 8, 25. April 1969 (1969-04-25), Seiten 117-127, XP000926211
- H.G.LEVELINK ET AL.: "Gasentwicklung in Formen und Kernen als Ursache von Gussfehlern" GIESSEREI, Bd. 67, Nr. 5, 3. März 1980 (1980-03-03), Seiten 109-115, XP000979366

## Beschreibung

Die Erfindung betrifft ein Verfahren zum Untersuchen des Verhaltens von Bindersystemen von Sandkernen beim Gießen von Metallteilen.

Gasblasen können in Gußstücken dann entstehen, wenn beim Gießen aufgrund einer Gasentwicklung im Formstoff an der Kontaktfläche zwischen Formteilen bzw. Sandkernen und flüssigem Metall der sich im Sandkern aufbauende Gasdruck größer wird als der metallostatische Druck an der Oberfläche des Sandkerns. Die Gefahr der Gasblasenbildung hält an, bis sich am Gußstück eine äußere Erstarrungsschicht an der Grenze zum Sandkern bildet. Um ein Austreten von Gas über die Kernoberfläche zu verhindern, werden beim Kokillenguß unterhalb der Kernmarken Gaskanäle vorgesehen, über die das im Formstoff entstehende Gas kontrolliert abgeleitet werden soll. Sofern das Gas zur übermäßigen Kondensatbildung neigt, ist die Gefahr gegeben, daß die Gaskanäle der Kokille frühzeitig verkleben oder verstopfen. Zur Bewertung des Verhaltens von Sandkernen beim Gießen sind bereits verschiedene Untersuchungsverfahren und -vorrichtungen vorgeschlagen worden.

Bei Verfahren einer ersten Gruppe wird auf praxisnahe Versuchsbedingungen verzichtet. Die Bestimmung der Gasentwicklung erfolgt hierbei durch Erhitzen von Formstoffproben in elektrischen Widerstandsöfen.

Bei einer zweiten Gruppe von Verfahren werden Formstoffprobekörper mit Metallschmelzen in direkte Berührung gebracht und es wird eine Bestimmung der Gasentwicklung bei möglichst genauer Nachahmung der in der Praxis beim Gießen auftretenden Bedingungen angestrebt.

Ein Verfahren und eine Vorrichtung der ersten Art ist in "Giesserei-Praxis", 1969, Seiten 117 - 127, beschrieben. Hierbei werden Sandkerne ausgehärtet und gegebenenfalls getrocknet und dann zerrieben. Der zerriebene Formstoff wird in einer definierten Charge in einem Gasentwicklungsrohr erhitzt und das sich entwickelnde Gas wird mit einer Meßbürette aufgefangen, wobei die Gasentwicklung über der Zeit erfaßt wird. Der das Ausgasen verhindernde oder verzögernde Einfluss des metallostatischen Drucks auf einen realen Sandkern bleibt hierbei gänzlich unberücksichtigt.

Ein Verfahren und eine Vorrichtung der zweiten Art ist im Artikel "Gasentwicklung in Formen und Kernen als Ursache von Gußfehlern" von H.G. Leveleink et al. in "Gießerei", Bd. 67 Nr.5, 3 März 1980, Seiten 109 - 115, beschrieben. Hierbei werden zylindrische Sandkerne (Probekerne) mit eingeformter röhrchenförmiger Sonde aus einer festen Einwaagemenge hergestellt und zur Durchführung der Untersuchung nur teilweise in Metallschmelze eingetaucht. Bei einer Probenlänge von 220 mm wird ein oberer Überstand von 20 mm über dem Schmelzespiegel eingehalten. Die Sonde reicht bis auf 10 mm bis zum Boden des Probekerns und dient zugleich zu dessen Halterung. Ein Ausgasen in der Metallschmelze oberhalb des Sondeendes kann dadurch nicht erfaßt werden. Nach diesem Verfahren wird nur der Druck über der Zeit aufgezeichnet. Das Ergebnis wird durch freies Entweichen von Gas aus dem Probekern außerhalb der Metallschmelze aufgrund der Gasdurchlässigkeit der offenliegenden Kernoberfläche wesentlich verfälscht.

Der Erfindung liegt hiervon ausgehend die Aufgabe zugrunde, ein Verfahren zur Untersuchung des Verhaltens von Sandkernen bzw. Formteilen bereitzustellen, mit dem praxisnahe und unverfälschte Ergebnisse erzielt werden können.

Eine Lösung, die auf einem Einbringen von standardisierten Probekernen in eine Metallschmelze beruht, besteht darin, daß ein Probekern vollständig in ein Metallschmelzebad eingetaucht wird und daß dem Probekern entweichendes Gas an dessen Oberfläche abgeleitet und zur zeitbezogenen Mengenbestimmung aufgefangen wird.

Eine weitere Lösung für die Untersuchung von Probekernen besteht darin, daß anstelle eines Ableitens und Auffangens von Gas der innere Gasdruckverlauf im Probekern an dessen Oberfläche überwacht und aufgezeichnet wird.

Eine andere Lösung, die sich auf Testgießvorgänge von Realteilen bezieht, besteht darin, daß ein Testkern, der während des Gießens eines Gußteils vollständig von Schmelzflüssigkeit bedeckt wird, mit Mitteln zur Gasableitung ausgestattet wird und daß beim Gießen des Metallteils dem Testkern entweichendes Gas an dessen Oberfläche abgeleitet und zur zeitbezogenen Mengenbestimmung aufgefangen wird. Als Testkern kommen hierbei solche Sandkerne oder Sandformteile einer Gießform in Betracht, die von vorneherein für den realen Gießvorgang als kritisch zu erkennen sind oder die bereits als Fehlerquelle im Hinblick auf Gasblasen erkannt sind.

Eine weitere Lösung für die Untersuchung des Verhaltens von Testkernen an Realteilen besteht darin, daß der innere Gasdruckverlauf im Testkern an dessen Oberfläche überwacht und aufgezeichnet wird, wobei gleichzeitig ein ordnungsgemäßes oder eventuell auch gestörtes Ableiten von Gas aus dem Testkern über Kernauflager und Gaskanäle erfolgen kann.

In allen vorgenannten Fällen wird vorzugsweise ein Sondenrohr an der höchsten Stelle des Probekerns oder Testkerns aufgesetzt.

Die erfindungsgemäßen Verfahren liefern durch die Verwendung von vollständig ausgebildeten Kernen und durch das vollständige Eintauchen dieser Kerne in die Metallschmelze realistische Bedingungen, die das reale Verhalten der Sandkerne an der Grenzschicht zur Metallschmelze zutreffend abbilden. Durch das Ableiten von Gas an der höchsten Stelle des Sandkerns und an der Oberfläche des Sandkerns wird entweichendes Gas dort aufgefangen, wo der metallostatische Druck am geringsten ist. Hierdurch werden Meßfehler infolge unkontrollierter Gasblasenbildung vermieden und die Gasmengenentwicklung unverfälscht erfaßt. Neben der Erfassung der Gasmengenentwicklung kann auch der im Gas enthaltene Feststoff niedergeschlagen und durch spätere Wägung gemessen werden und/oder zusammen mit der Gasmengenstsrommessung der Gasdruckverlauf über der Zeit aufgezeichnet werden. Parallel zum Gasdruckverlauf wird vorzugsweise auch der metallostatische Druck unmittelbar oberhalb der höchsten Stelle des Probe- oder Testkerns erfaßt und aufgezeichnet. Nach einer einfachen Methode wird hierbei die Höhe des Schmelzepegels durch berührungslose Abstandsmessung gemessen und hieraus der metallostatische Druck errechnet. Allgemein gilt, daß auf einen gasblasenfreien Gußverlauf geschlossen werden kann, wenn der metallostatische Druck jederzeit höher als der Gasdruck ist, und daß umgekehrt mit Gasblasen zu rechnen ist, wenn der Gasdruck vor Erstarrungsbeginn den metallostatischen Druck überschritten hat. Ein unmittelbarer Rückschluß auf Gasblasenbildung kann auch alleine aus dem Verlauf des Gasdruckes getroffen werden. Ist dieser stetig, so darf auf einen gasblasenfreien Gießvorgang geschlossen werden. Sind hingegen unstetige Druckabfälle zu beobachten, kann von einem Austreten von Gasblasen ausgegangen werden.

Eine Vorrichtung zur Durchführung des Verfahrens, die einen Schmelzebehälter und einen Probekern sowie eine Halterung, mit der der Probekern vollständig in die in dem Behälter befindliche Metallschmelze eintauchbar ist, umfaßt, ist gekennzeichnet durch eine röhrchenförmige Sonde, die auf den Probekern aufgesetzt ist, und einen mit der Sonde über eine Verbindungsleitung verbundenen Gasauffangbehälter oder eine über eine Verbindungsleitung mit der Sonde verbundene Druckmeß- und -aufzeichnungsvorrichtung. Eine andere Vorrichtung zur Durchführung des Verfahrens beim Gießen von Realteilen ist gekennzeichnet durch eine röhrchenförmige Sonde, die auf einen Testkern in einer Gießform aufgesetzt ist, und einen mit der Sonde über eine Verbindungsleitung verbundenen Gasauffangbehälter oder eine mit der Sonde über eine Verbindungsleitung verbundene Druckmeß- und -aufzeichnungsvorrichtung. Die Sonde ist bevorzugt jeweils an der höchsten Stelle des Probekerns bzw. des Testkerns aufgesetzt. Hierbei ist die Vorrichtung weiter gekennzeichnet durch eine Waage, ein wassergefülltes Becken, einen in das Becken reichenden, unabhängig von diesem aufgehängten nach unten offenen wassergefüllten Zylinder, in den die Verbindungsleitung mündet, wobei die nach unten offene Öffnung des Zylinders zu Versuchsbeginn unter den Wasserspiegel des Beckens eintaucht. Die Waage wird hierbei von der Auflagerung des Zylinders (negative Meßwerte, abnehmendes Gewicht) oder alternativ vom wassergefüllten Becken (positive Meßwerte, zunehmendes Gewicht) belastet. In der Verbindungsleitung von der Sonde zur Auffangvorrichtung kann ein insbesondere druckabhängig selbsttätig gesteuertes Absperrelement vorgesehen sein, das die Verbindungsleitung erst bei Überschreiten eines Mindestdruckes freigibt. Das in den Zylinder gelangende Gas verdrängt Wasser aus diesem nach unten, das im Becken aufsteigt. Hierbei wird der Zylinder entlastet und das Becken zusätzlich belastet. Aus der festzustellenden Gewichtsdifferenz läßt sich unter Berücksichtigung der Dichte des Wassers die Gasvolumenentwicklung über der Zeit aufzeichnen und berechnen.

Die verwendeten Probekerne können in Kugelform oder einfacher Quaderform ausgeführt werden. Andere kompakte Formen sind möglich. Probekerne können aus realen Sandformen herausgeschnitten werden. Das Gewicht der Probekerne kann vorzugsweise zwischen 20 und 100 g liegen. Das Eintauchen der Probekerne in die Schmelze und Untertauchen unter die Badoberfläche kann durch jede denkbare Relativbewegung zwischen Metallschmelzebehälter und Probekern erfolgen, d. h. Eingießen von Schmelze in einen oben offenen Behälter mit darin fixiertem Probekern oder Anheben bzw. Absenken als Relativbewegung zwischen einer mit Schmelze gefüllten oben offenen Behälter und einem Probekern.

Bei der Durchführung des Verfahrens an Teilen von realen Sandformen, werden Testkerne ausgewählt, die - mit Ausnahme ihrer Auflagerung auf Kernmarken - während des Gießens vollständig von Schmelzflüssigkeit bedeckt werden.

Bei beiden Verfahrensarten wird die röhrchenförmige Sonde - bevorzugt an der höchsten Stelle - des Probekerns oder Testkerns mit geringem Auflagedruck auf die Oberfläche des Kerns aufgesetzt und angedrückt, oder geringfügig in diese eingedrückt, um einen Abdichtungseffekt zu erzielen. Im übrigen wird ein solcher Abdichtungseffekt bereits durch die Oberflächenspannung der Metallschmelze hinreichend gewährleistet.

Die Sonde kann mit einer Druckmeßvorrichtung verbunden sein, die an eine Zweigleitung angeschlossen sein kann. Weiterhin kann die Sonde mit einer Kondensatfalle zur Niederschlagung von Kondensat verbunden sein, die in der Hauptleitung zur Gasauffangvorrichtung liegen sollte.

Es wird schließlich eine Vorrichtung zur Messung der geodätischen Höhe des Schmelzespiegels über der höchsten Stelle des Probekerns oder Testkerns vorgeschlagen, z. B. in Form eines Lasermeßkopfes, der über zwei Messungen vor dem Einfüllen von Schmelze und nach dem Einfüllen von Schmelze den Schmelzepegel über der höchsten Stelle des Kerns erfaßt. Damit läßt sich der metallostatische Druck über der höchsten Stelle des Kerns errechnen.

Bevorzugte Ausführungsbeispiele der Erfindung sind in den Zeichnungen gezeigt und werden nachstehend erläutert.
- Fig. 1: zeigt eine schematische Darstellung einer Versuchs- anordnung mit Probekern und Behälter in einer ersten Ausführung;
- Fig. 2: zeigt ein Beispiel eines Versuchsschriebes;
- Fig. 3: zeigt eine schematische Darstellung einer Versuchs- anordnung ähnlich Figur 1 in einer zweiten Ausführung;
- Fig. 4: zeigt eine schematische Darstellung einer Versuchs- anordnung an einer realen Gießform mit einem Testkern.

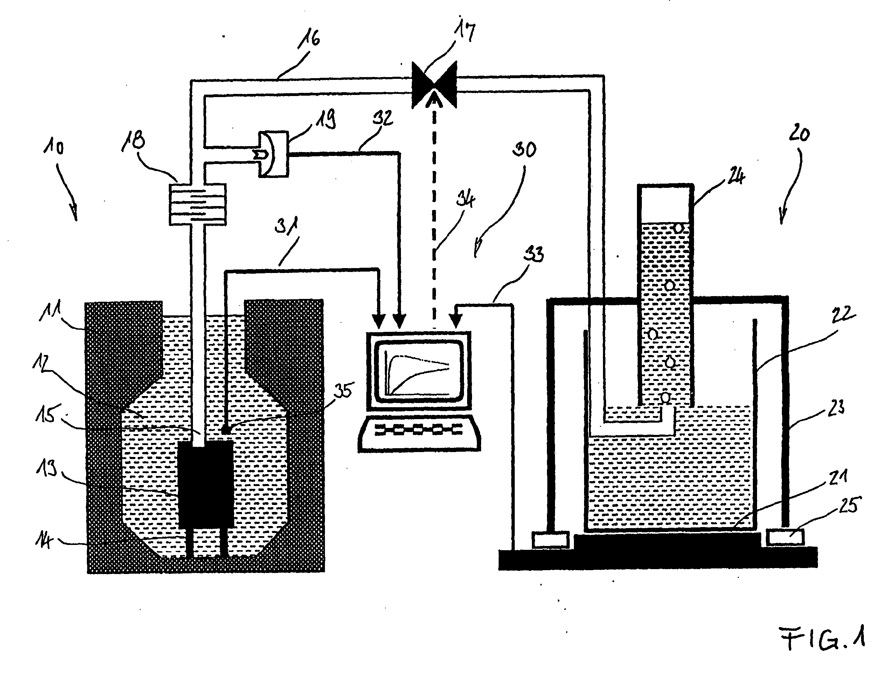

In Figur 1 ist links eine Probegießvorrichtung 10 mit einer Probeform (Behälter) 11 gezeigt, die bereits mit Schmelze 12 weitgehend gefüllt ist und in der sich ein Probekern 13 vollständig unter den Schmelzespiegel untergetaucht weitgehend freistehend auf einem Gestell 14 ruhend befindet. In den Probekern 13 ist an dessen höchsten Stelle eine röhrchenförmige Sonde 15 von oben eingesetzt, über die Gas aus dem Probekern 13 entweichen kann. Das Ende der Sonde 15 liegt praktisch an der Oberfläche des Probekerns 13. In einer an die Sonde 15 anschließenden Verbindungsleitung 16, die zu einer Auffangvorrichtung 20 führt, ist ein Absperrventil 17 angeordnet. Die Auffangvorrichtung 20 umfaßt ein auf einem Sockel 21 stehendes wassergefülltes Becken 22 und einen in einem Gestell 23 unabhängig von dem Becken aufgehängten nach unten offenen Zylinder 24, unter dem die Verbindungsleitung 16 mündet. Die insbesondere drei Füße des Gestells 23 ruhen auf miteinander verknüpften Meßzellen 25 einer Waage. Der Zylinder 24 ist ebenso wie das Becken 22 bei Versuchsbeginn wassergefüllt und ragt mit seiner Öffnung unter den Wasserspiegel im halbgefüllten Becken 22. In der Verbindungsleitung 16 befindet sich eine Kondensatfalle 18. An die Verbindungsleitung 16 ist weiterhin ein Druckaufnehmer 19 angeschlossen. Eine Steuer- und Auswertevorrichtung 30 ist symbolisch zwischen der Probegießvorrichtung 10 und der Auffangvorrichtung 20 gezeigt. Diese wird über eine Meßsignalleitung 31 mit Temperaturmeßwerten eines Temperatursensors 35 und über eine Meßsignalleitung 32 mit Gasdruckmeßwerten versorgt, weiterhin über eine Meßsignalleitung 33 mit den Gewichtsmeßwerten der Meßzellen 25 der Waage. Der Temperatursensor 35 befindet sich unmittelbar über der höchsten Stelle des Probekerns 13. Über eine Steuerleitung 34 wird ferner von der Steuer- und Auswertevorrichtung 30 das Absperrventil 17 gesteuert. Die Steuer- und Auswertevorrichtung 30 verfügt über eine interne Zeitgebereinheit. Wenn anstelle der Mengenstrombestimmung des entweichenden Gases eine Druckmessung des Gasdrucks treten soll, bleibt das Absperrventil während des gesamten Versuches geschlossen.

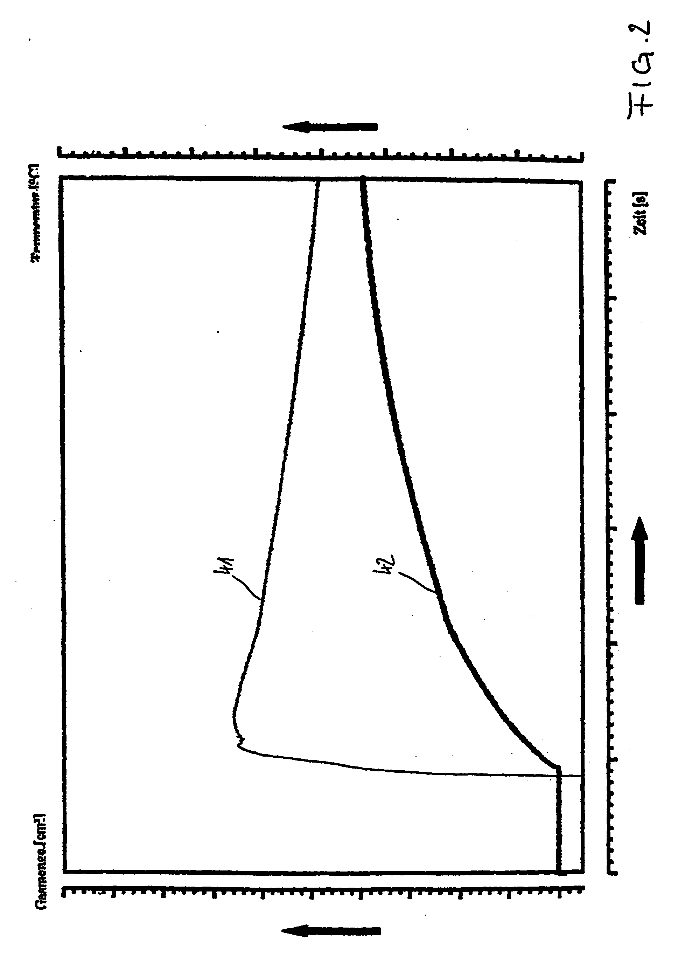

In Figur 2 ist für einen Probeguß mit einer Vorrichtung nach Figur 1 die Entwicklung der Temperatur mit 41 und die Entwicklung des Gasvolumens mit 42 jeweils über die Zeit aufgezeichnet. Nicht dargestellt, aber vorzugsweise ebenfalls aufzuzeichnen ist der metallostatische Druck in Höhe der Sonde am Probekern.

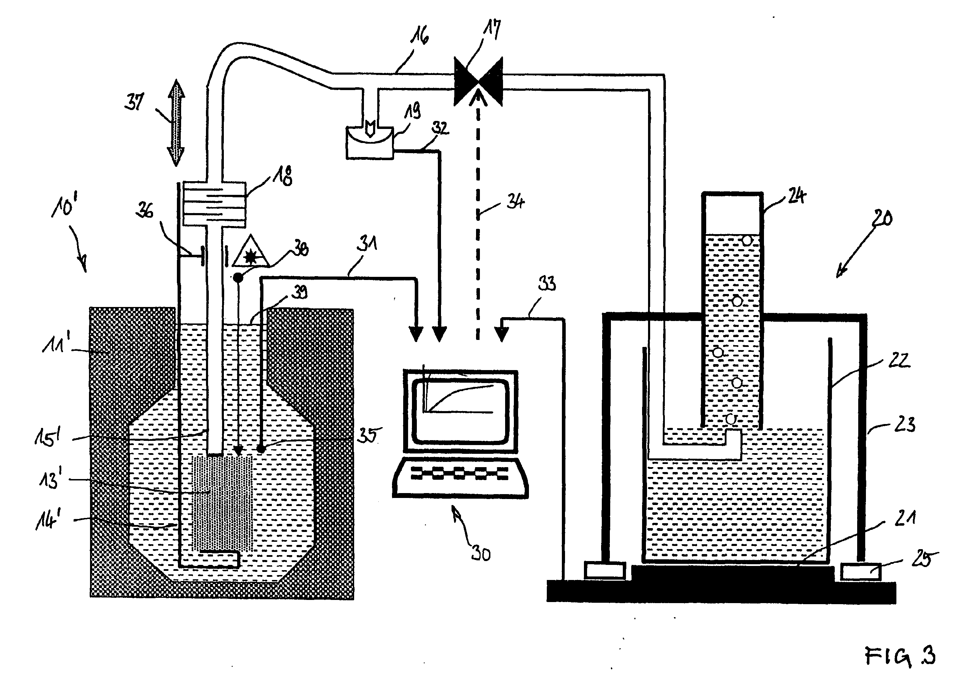

In Figur 3 stimmen die Einzelheiten weitgehend mit denen in Figur 1 überein. Abgewandelte Teile sind mit gleichen Bezugsziffern belegt, jedoch mit dem Index' versehen. Auf die Beschreibung wird insoweit Bezug genommen. Der Probekern 13' hängt hier jedoch in einer höhenverstellbaren Aufhängung 14', wie durch einen Pfeil 37 angedeutet. Die Aufhängung umfaßt eine Halterung 36 für die Sonde 15'. In dieser Halterung 36 ist die Sonde 15 gehalten, deren offenes unteres Ende auf den Probekern 13' an dessen höchster Stelle aufgesetzt ist, ohne in dessen Oberfläche einzudringen. Die Sonde 15 ist ihrerseits relativ zur Halterung 36 höhenverschieblich gehalten. Oberhalb des Behälters (Probeform) 11 ist eine berührungslose Abstandsmeßvorrichtung 38 montiert, die vor dem Einfüllen von Schmelze in den Behälter 11 den Abstand zur höchsten Stelle des Probekerns 13' und nach dem Einfüllen von Schmelze in den Behälter 11 den Abstand bis zum Schmelzespiegel 36 messen kann. Aus der Differenz läßt sich der Schmelzepegel über der höchsten Stelle des Probekerns 13' und daraus der metallostatische Druck in Höhe des Endes der Sonde 15 errechnen. Je nach Stellung des Absperrventils 17 wird über die Sonde 15 Gas aus dem Probekern 13' abgeleitet oder der Gasdruck im Probekern 13' ermittelt.

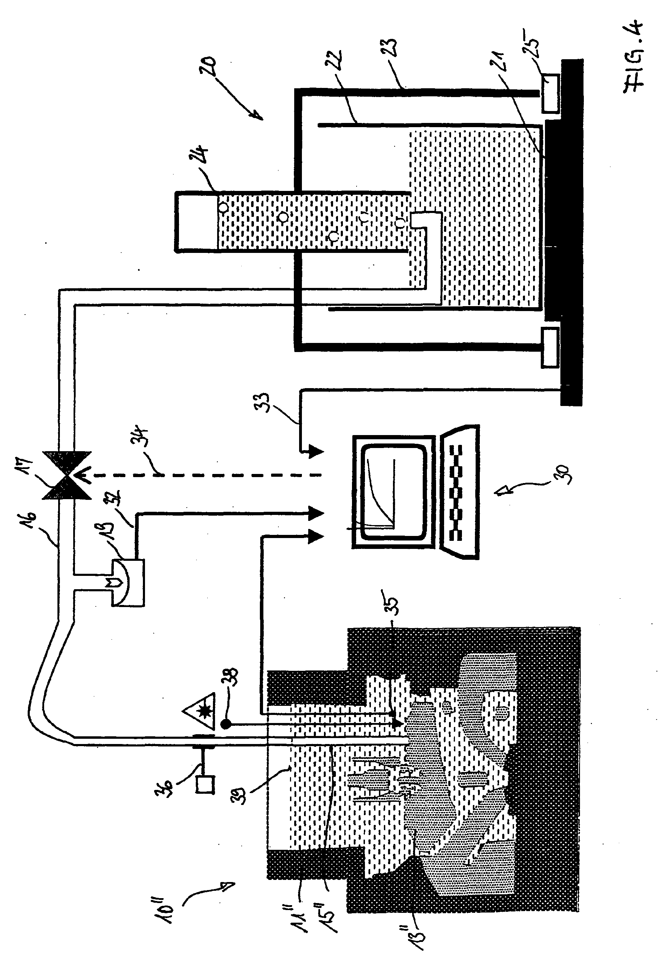

In Figur 4 stimmt ein Teil der Einzelheiten mit denen in den Figuren 1 und 3 überein. Abgewandelte Teile sind mit gleichen Bezugsziffern belegt, jedoch mit dem Index'' versehen. Auf die Beschreibung wird insoweit Bezug genommen. Ein Testkern 13" liegt über nicht dargestellte Kernmarken als einer von mehreren Sandkernen, in einer Gießform 11" ein, die eine Dauergießform oder eine Sandform sein kann. Eine solche Sandform kann insbesondere als sogenanntes Kernpaket aus mehreren Formteilen aufgebaut sein. Der Testkern 13" ist am Ende des Gießvorgangs wie dargestellt, vollständig von Metallschmelze 12" bedeckt. In einer Halterung 36" ist die Sonde 15" gehalten, deren offenes unteres Ende auf den Testkern 13" an dessen höchster Stelle aufgesetzt ist, ohne in dessen Oberfläche einzudringen. Die Sonde 15" ist in der Halterung 36" höhenverschieblich gehalten. Oberhalb des Behälters (Testkern 13") 11 ist eine berührungslose Abstandsmeßvorrichtung 38 montiert, die vor dem Einfüllen von Schmelze in den Behälter 11 den Abstand zur höchsten Stelle des Testkerns 13" und nach dem Einfüllen von Schmelze in den Behälter 11 den Abstand bis zum Schmelzespiegel 36 messen kann. Aus der Differenz läßt sich der Schmelzepegel über der höchsten Stelle des Testkerns 13" und daraus der metallostatische Druck in Höhe des Endes der Sonde 15 errechnen. Je nach Stellung des Absperrventils 17 wird über die Sonde 15 Gas aus dem Testkern 13" abgeleitet oder der Gasdruck im Testkern 13" ermittelt.

### Bezugszeichenliste

- 10: Probegießvorrichtung
- 11: Probeform/Gießform
- 12: Metallschmelzebad
- 13: Probekern
- 14: Gestell, Halterung
- 15: Sonde
- 16: Verbindungsleitung
- 17: Absperrventil
- 18: Kondensatfalle
- 19: Druckaufnehmer
- 20: Auffangvorrichtung
- 21: Sockel
- 22: Becken
- 23: Gestell
- 24: Zylinder
- 25: Meßzellen
- 30: Steuer- und Auswertevorrichtung
- 31: Meßsignalleitung
- 32: Meßsignalleitung
- 33: Meßsignalleitung
- 34: Steuerleitung
- 35: Temperatursensor
- 36: Halterung
- 37: Doppelpfeil
- 38: Abstandsmeßvorrichtung
- 39: Schmelzespiegel

## Patentansprüche

1. Verfahren zum Untersuchen des Verhaltens von Bindersystemen von Sandkernen beim Gießen von Metallteilen mittels eines Einbringens von Probekernen in eine Metallschmelze,
**dadurch gekennzeichnet,**
**daß** ein Probekern (13, 13') vollständig in ein Metallschmelzebad (12) eingetaucht wird und
**daß** dem Probekern (13, 13') entweichendes Gas an dessen Oberfläche abgeleitet und zur zeitbezogenen Mengenbestimmung aufgefangen wird.

2. Verfahren zum Untersuchen des Verhaltens von Bindersystemen von Sandkernen beim Gießen von Metallteilen, bei dem einzelne Gießkerne einer Gießform als Testkerne ausgewählt werden,
**dadurch gekennzeichnet,**
**daß** ein Testkern (13"), der während des Gießens eines Gießteils vollständig von Schmelzflüssigkeit (12") bedeckt wird, mit Mitteln zur Gasableitung ausgestattet wird und daß beim Gießen des Gußteils dem Testkern (13") entweichendes Gas an dessen Oberfläche abgeleitet und zur zeitbezogenen Mengenbestimmung aufgefangen wird.

3. Verfahren zum Untersuchen des Verhaltens von Bindersystemen von Sandkernen beim Gießen von Metallteilen mittels eines Einbringens von Probekernen in eine Metallschmelze,
**dadurch gekennzeichnet,**
**daß** ein Probekern (13, 13') vollständig in ein Metallschmelzebad (12) eingetaucht wird und
**daß** der im Probekern (13, 13') an dessen Oberfläche anstehende Gasdruck überwacht und aufgezeichnet wird.

4. Verfahren zum Untersuchen des Verhaltens von Bindersystemen von Sandkernen beim Gießen von Metallteilen, bei dem einzelne Gießkerne einer Gießform als Testkerne ausgewählt werden,
**dadurch gekennzeichnet,**
**daß** ein Testkern (13"), der während des Gießens eines Gießteils vollständig von Schmelzflüssigkeit (12'') bedeckt wird, mit Mitteln zur Gasableitung ausgestattet wird und
**daß** beim Gießen des Gußteils der im Testkern (13") an dessen Oberfläche anstehende Gas überwacht und aufgezeichnet wird.

5. Verfahren nach einem der Ansprüche 1 oder 2,
**dadurch gekennzeichnet,**
**daß** das entweichende Gas an der höchsten Stelle des Probekerns (13, 13') bzw. des Testkerns (13") abgeleitet wird.

6. Verfahren nach einem der Ansprüche 3 oder 4,
**dadurch gekennzeichnet,**
**daß** der Gasdruck an der höchsten Stelle des Probekerns (13, 13') bzw. des Testkerns (13'') überwacht wird.

7. Verfahren nach einem der Ansprüche 1 oder 2,
**dadurch gekennzeichnet,**
**daß** die im entweichenden Gas enthaltenen Feststoffe als Kondensat niedergeschlagen und durch Wägung gemessen werden.

8. Verfahren nach einem der Ansprüche 1 oder 2,
**dadurch gekennzeichnet,**
**daß** der im abgeleiteten Gas anstehende Gasdruck überwacht bzw. aufgezeichnet wird.

9. Verfahren nach einem der Ansprüche 1 bis 4,
**dadurch gekennzeichnet,**
**daß** während des Ableitens von Gas bzw. während des Überwachens des Gasdrucks der metallostatische Druck unmittelbar oberhalb der höchsten Stelle des Probekerns (13, 13') bzw. des Testkerns (13") ermittelt wird.

10. Verfahren nach einem der Ansprüche 1 bis 4,
**dadurch gekennzeichnet,**
**daß** das Ableiten von Gas bzw. das Überwachen des Gasdrucks über eine röhrchenförmige Sonde (15) erfolgt, die auf einen fertigen Probekern (13, 13') oder Testkern (13") aufgesetzt wird, gegebenenfalls unter geringem Eindrücken in die Oberfläche des Probekerns bzw. des Testkerns.

11. Verfahren nach Anspruch 1,
**dadurch gekennzeichnet,**
**daß** ein Probekern (13, 13') aus einem realen Gießkern herausgeschnitten wird.

12. Verfahren nach Anspruch 4,
**dadurch gekennzeichnet,**
**daß** während des Überwachens des Gasdrucks im Testkern ein Entweichen von Gas aus dem Testkern über Kernauflager und Gaskanäle erfolgt.

## Claims

1. Process for investigating the behaviour of binder systems of sand cores during casting of metal parts by introducing sample cores into a molten metal,
**characterised in that**
a sample core (13, 13') is fully immersed in a molten metal bath (12) and
**in that** gas escaping from the sample core (13, 13') is lead off its surface and collected for quantity determination as a function of time.

2. Process for investigating the behaviour of binder systems of sand cores during casting of metal parts, in which individual casting cores of a casting mould are selected as test cores,
**characterised in that**
a test core (13"), which during casting of a cast part is fully covered by molten fluid (12"), is equipped with means for leading off gas and
**in that** when the cast part is cast, gas escaping from the test core (13") is lead off its surface and collected for quantity determination as a function of time.

3. Process for investigating the behaviour of binder systems of sand cores during casting of metal parts by introducing sample cores into a molten metal,
**characterised in that**
a sample core (13, 13') is fully immersed in a molten metal bath (12) and
**in that** the gas pressure in the sample core (13, 13') exerted on its surface is monitored and recorded.

4. Process for investigating the behaviour of binder systems of sand cores during casting of metal parts, in which individual casting cores of a casting mould are selected as test cores,
**characterised in that**
a test core (13"), which during casting of a cast part is fully covered by molten fluid (12"), is equipped with means for leading off gas and
**in that** when the cast part is cast, the gas present on its surface is monitored and recorded.

5. Process according to one of claims 1 or 2,
**characterised in that**
the escaping gas is lead off at the highest point of the sample core (13, 13') and/or of the test core (13").

6. Process according to one of claims 3 or 4,
**characterised in that**
the gas pressure at the highest point of the sample core (13, 13') and/or of the test core (13') is monitored.

7. Process according to one of claims 1 or 2
**characterised in that**
the solid matter contained in the escaping gas is precipitated as a condensate and measured by weighing.

8. Process according to one of claims 1 or 2,
**characterised in that**
the gas pressure exerted in the lead off gas is monitored and/or recorded.

9. Process according to one of claims 1 to 4,
**characterised in that**
during the leading off of gas and/or during the monitoring of the gas pressure, the metallostatic pressure is determined directly above the highest point of the sample core (13, 13') and/or of the test core (13").

10. Process according to one of claims 1 to 4,
**characterised in that**
the leading off of gas and/or the monitoring of the gas pressure takes place by means of a tubular probe (15), which is placed on a finished sample core (13, 13') or test core (13"), if necessary slightly pressing into the surface of the sample core and/or of the test core.

11. Process according to Claim 1,
**characterised in that**
a sample core (13, 13') is cut from an actual casting core.

12. Process according to Claim 4,
**characterised in that**
during the monitoring of the gas pressure in the test core, escaping of gas from the test core takes place via the core support and gas channels.

## Revendications

1. Procédé pour l'étude du comportement de systèmes de liants de noyaux en sable, lors de la coulée de pièces métalliques, par l'apport d'échantillons de noyaux dans un bain de fusion métallique, **caractérisé en ce qu'**un échantillon de noyau (13, 13') est complètement plongé dans un bain de fusion métallique (12) et qu'un gaz, qui se dégage de l'échantillon de noyau (13, 13') dérive sur la surface de celui-ci et est intercepté aux fins d'une détermination quantitative par rapport au temps.

2. Procédé pour l'étude du comportement de systèmes de liants de noyaux en sable lors de la coulée de pièces métalliques, dans lequel plusieurs noyaux de coulée d'un moule sont sélectionnés en tant que noyaux de test, **caractérisé en ce qu'**un noyau de test (13''), que l'on couvre complètement avec un liquide de fusion (12''), est équipé de moyens pour la dérivation du gaz, et que, lors de la coulée de la pièce, le gaz, qui se dégage du noyau de test (13''), dérive sur la surface de celui-ci et est intercepté aux fins de détermination quantitative par rapport au temps.

3. Procédé pour l'étude du comportement de systèmes de liants de noyaux en sable, lors de la coulée de pièces métalliques, par un apport d'échantillons de noyaux dans un bain de fusion métallique, **caractérisé en ce qu'**un échantillon de noyau (13, 13') est complètement plongé dans un bain de fusion métallique (12) et que la pression de gaz, se manifestant, dans l'échantillon de noyau (13, 13'), sur la surface de celui-ci, est contrôlée et enregistrée.

4. Procédé pour l'étude du comportement de systèmes de liants de noyaux en sable, lors de la coulée de pièces métallique, dans lequel plusieurs noyaux de coulée d'un moule sont sélectionnés en tant que noyaux de test, **caractérisé en ce qu'**un noyau de test (13''), que l'on couvre complètement avec un liquide de fusion (12''), pendant la coulée d'une pièce métallique, est équipé de moyens pour la dérivation du gaz, et que, lors de la coulée de la pièce, le gaz, dégagé à la surface du noyau de test (13"), est contrôlé et enregistré.

5. Procédé selon l'une des revendications 1 ou 2, **caractérisé en ce que** le gaz dégagé est dérivé à l'endroit le plus élevé de l'échantillon de noyau (13, 13'), respectivement du noyau de test (13'').

6. Procédé selon l'une des revendications 3 ou 4, **caractérisé en ce que** la pression de gaz est contrôlée à l'endroit le plus élevé de l'échantillon de noyau (13, 13'), respectivement du noyau de test (13'').

7. Procédé selon l'une des revendications 1 ou 2, **caractérisé en ce que** les corps solides, contenus dans le gaz dégagé, se déposent sous la forme de condensat et sont mesurés par pesée.

8. Procédé selon l'une des revendications 1 ou 2, **caractérisé en ce que** la pression dans le gaz dérivé est contrôlée, respectivement enregistrée.

9. Procédé selon l'une des revendications 1 à 4, **caractérisé en ce que**, pendant la dérivation du gaz, respectivement pendant le contrôle de la pression du gaz, la pression métallo-statique est directement déterminée à l'endroit le plus élevé de l'échantillon de noyau (13, 13'), respectivement du noyau de test (13'').

10. Procédé selon l'une des revendications 1 à 4, **caractérisé en ce que** la dérivation du gaz, respectivement le contrôle de la pression de gaz est effectué(e) par l'intermédiaire d'une sonde en forme de tube (15), qui est placée sur un échantillon de noyau (13, 13') ou un noyau de test (13") fini, le cas échéant en exerçant une légère pression sur la surface de l'échantillon de noyau, respectivement du noyau d'essai.

11. Procédé selon la revendication 1, **caractérisé en ce qu'**un échantillon de noyau (13, 13') est découpé dans un noyau de coulée réel.

12. Procédé selon la revendication 4, **caractérisé en ce que**, pendant le contrôle de la pression de gaz dans le noyau de test, du gaz se dégage du noyau de test, par l'intermédiaire de supports de noyaux et de canaux à gaz.
